# EUROPEAN PATENT APPLICATION

(11) **EP 4 624 115 A1**
(43) Date of publication of application: **01.10.2025**
(21) Application number: 24905119.4
(22) Date of filing: 26.09.2024
(51) Int. Cl.: B25J 13/08, B25J 9/16, B25J 5/00, G05D 1/246, G05D 1/43, G05D 109/10, B25J 11/00

(54) **METHOD, ROBOT AND PROGRAM FOR GENERATING MONITORING PATH OF FACILITY MONITORING ROBOT**

(30) Priority: 29.01.2024 KR 20240013501; 23.09.2024 KR 20240128483
(71) Applicant: DOGU CO., LTD., Daegu 41496 (KR)
(72) Inventor: QUAN, Cheng Hao, Seoul 02512 (KR); TRAN, Quoc Huy, Seoul 07674 (KR); KIM, Jin Hyo, Sokcho-si Gangwon-do 24805 (KR)
(74) Representative: BCKIP Part mbB
(86) International application number: PCT/KR2024/014597
(87) International publication number: WO 2025/164872

(57) **Abstract**

A method for generating a facility monitoring path of a robot according to the present disclosure includes: generating one or more monitoring path candidates based on state data of the robot that monitors a target space; selecting an optimal monitoring path from among the monitoring path candidates based on state data and a monitoring path of another robot that monitors the target space; and performing monitoring work for the target space based on the optimal monitoring path.

## Description

### [Technical Field]

The present invention relates to a technology for generating a monitoring path of a facility monitoring robot.

### [Background Art]

Hitherto, facility monitoring work has been often performed using a single robot. In such a method, one robot moves along a fixed path and performs monitoring, and thus, a monitoring range is inevitably limited. In particular, there is a major problem that a blind spot may occur in a wide area or a facility with a complex structure.

In addition, since a single robot performs work with limited resources, it is difficult to immediately cope with an unexpected situation occurring in a specific area. For example, in a case where an unexpected event such as a fire, intrusion, or equipment failure occurs, there is a limitation in immediately detecting the event or coping with the event by changing a path because the robot only moves along the fixed path.

In order to overcome such limitations of such a single-robot-based monitoring system, a monitoring system using multiple robots has emerged. A multi-robot system in which multiple robots operate simultaneously and monitor different areas has an advantage of performing monitoring work in a wider range.

However, new problems may also arise in the multi-robot system in which multiple robots move individually without cooperation.

In a case where each robot performs work independently in a non-cooperative manner, paths of the robots may overlap each other or the work may be unnecessarily repeated. In this case, multiple robots may perform redundant work in a specific area, which may result in a waste of resources and neglect of monitoring other important areas.

In addition, when the robots operate independently without cooperating in real time, state changes of other robots or environmental changes are not considered. Therefore, in a case where a specific robot stops work due to a low battery level, the presence of an obstacle, or a sensor malfunction, monitoring may be missed.

Therefore, a method for generating a monitoring path of a facility monitoring robot has been demanded to solve the limitations of such a non-cooperative multi-robot system.

### [Disclosure]

### [Technical Problem]

An object of the present invention is to propose a method for generating a monitoring path of a facility monitoring robot, a robot, and a program.

Specifically, an object of the present invention is to provide a method for generating a monitoring path of a facility monitoring robot by considering a monitoring path of another robot.

Objects of the present invention are not limited to the above-mentioned object, and other objects and advantages of the present invention that are not mentioned may be understood by the following description and will be more clearly appreciated by exemplary embodiments of the present invention. In addition, it may be easily appreciated that objects and advantages of the present invention may be realized by means mentioned in the claims and a combination thereof.

### [Technical Solution]

According to an exemplary embodiment of the present invention, a method for generating a facility monitoring path executed by a robot may include: generating one or more monitoring path candidates based on state data of the robot that monitors a target space; selecting an optimal monitoring path from among the monitoring path candidates based on state data and a monitoring path of another robot that monitors the target space; and performing monitoring work for the target space based on the optimal monitoring path.

In the selecting of the optimal monitoring path, the optimal monitoring path may be selected such that monitoring ranges of the robots that monitor the target space do not overlap each other.

The state data may include at least one of a remaining battery level, a sensor state, a movement speed, or a current position.

In the generating of one or more monitoring path candidates, the monitoring path candidates may be generated by considering a high-priority monitoring region in the target space.

In the generating of one or more monitoring path candidates, the monitoring path candidates may be generated by considering a specific event in a case where the specific event occurs in the target space.

In the generating of one or more monitoring path candidates, a dynamic change region that is likely to be affected by the specific event may be predicted, and the monitoring path candidates may be generated by considering the predicted dynamic change region.

According to another exemplary embodiment of the present invention, a robot that executes a method for generating a facility monitoring path may include: a control unit generating one or more monitoring path candidates based on state data of the robot that monitors a target space, selecting an optimal monitoring path from among the monitoring path candidates based on state data and a monitoring path of another robot that monitors the target space, and performing monitoring work for the target space based on the optimal monitoring path.

The control unit may select the optimal monitoring path such that monitoring ranges of the robots that monitor the target space do not overlap each other.

The state data may include at least one of a remaining battery level, a sensor state, a movement speed, or a current position.

The control unit may generate the monitoring path candidates by considering a high-priority monitoring region in the target space.

The control unit may generate the monitoring path candidates by considering a specific event in a case where the specific event occurs in the target space.

The control unit may predict a dynamic change region that is likely to be affected by the specific event and generate the monitoring path candidates by considering the predicted dynamic change region.

According to another exemplary embodiment of the present invention, a computer program stored in a computer-readable recording medium may include a program code for executing the method for generating an optimal traveling path described above.

According to another embodiment of the present invention, a computer-readable recording medium may record a computer program for executing the method for generating an optimal traveling path described above.

### [Advantageous Effects]

According to the present invention described above, the monitoring path and state data of another robot are received in real time, and the monitoring path is selected based on the received monitoring path and state data of another robot, so that it is possible to prevent overlap in monitoring range between the robots and maximize monitoring efficiency.

In addition, the present invention enables the robot to continuously optimize the path based on real-time state data of the target space, so that it is possible to immediately cope with a dynamic environmental change, unlike the existing fixed path monitoring method.

Effects of the present invention are not limited to the effects described above, and other effects that are not mentioned may be obviously understood by those skilled in the art from the following description.

### [Description of Drawings]

FIGS. 1 and 2 are views illustrating a robot according to an exemplary embodiment of the present invention;
FIG. 3 is a diagram illustrating a configuration of a robot control system according to an exemplary embodiment of the present invention;
FIG. 4 is a diagram illustrating a configuration of the robot according to an exemplary embodiment of the present invention;
FIG. 5 is a diagram illustrating a map generation method according to an exemplary embodiment of the present invention;
FIG. 6 is a diagram illustrating some of maps described in FIG. 5;
FIG. 7 is a diagram illustrating a map generation method according to an exemplary embodiment of the present invention; and
FIGS. 8 and 9 are flowcharts illustrating methods for generating a monitoring path according to an exemplary embodiment of the present invention.

### [Best Mode]

The following description illustrates only a principle of the present invention. Therefore, those skilled in the art may implement the principle of the present invention and invent various apparatuses included in the spirit and scope of the present invention even though they are not clearly described or illustrated in the present specification. In addition, it is to be understood that all conditional terms and exemplary embodiments mentioned in the present specification are obviously intended only to allow those skilled in the art to understand a concept of the present invention in principle, and the present invention is not limited to exemplary embodiments and states particularly mentioned as such.

The abovementioned objects, features, and advantages will become more obvious from the following detailed description associated with the accompanying drawings. Therefore, those skilled in the art to which the present invention pertains may easily practice a technical idea of the present invention.

Further, in describing the present invention, when it is decided that a detailed description of the well-known technology associated with the present invention may unnecessarily make the gist of the present invention unclear, it will be omitted.

Hereinafter, various exemplary embodiments of the present invention will be described in detail with reference to the accompanying drawings.

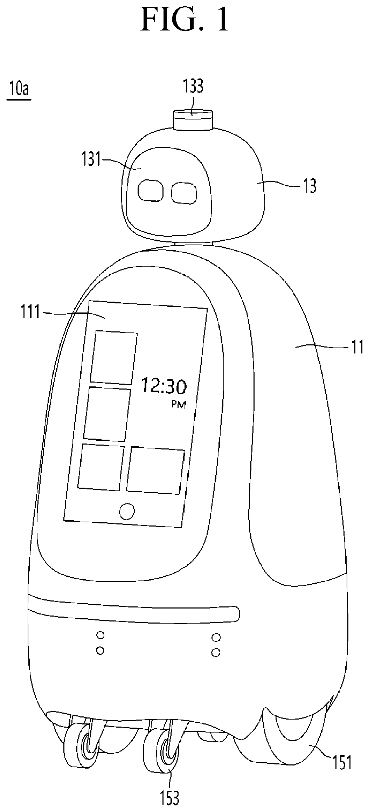

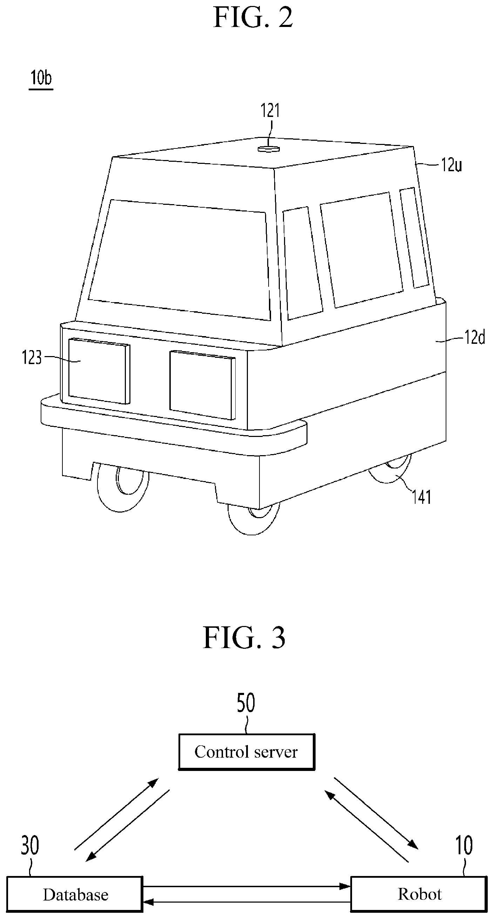

FIGS. 1 and 2 are drawings illustrating a robot 10 according to an exemplary embodiment of the present invention. Here, the robot 10 may be divided into a robot 10a that travels in an indoor environment and a robot 10b that travels in an outdoor environment.

For example, the robot 10a, which includes a display unit 111 provided on a front surface as in FIG. 1 and requires information exchange with a user, may be suitable for traveling in the indoor environment, and the robot 10b, which is sealed by a housing 12 as in FIG. 2 and does not include a separate display unit, may be suitable for traveling in the outdoor environment.

The robot 10a in FIG. 1 may include a body portion 11, traveling portions 151 and 153, and a head portion 13.

The head portion 13 may include a display unit 131 provided on a front surface of the head portion 13 to display information for communication with the user, and a sensor 133 may be provided at an upper portion of the head portion 13 to collect various information necessary for traveling of the robot 10a.

The body portion 11 may include the display unit 111 provided on a front surface of the body portion 11 to display information required by the user, a state of the robot, or the like. For example, the display unit 131 of the head portion may display information in the form of a feedback based on an input value of the user or an administrator, and the display unit 111 of the body portion may display a time, weather, information regarding a target space, the state of the robot, or the like and may display the above-described information in various ways according to a user operation.

The traveling portion according to the present exemplary embodiment may be provided in the form of wheels at a lower portion of the body portion 11, and may include a main wheel 151 that directly rotates by a motor, and an auxiliary wheel 153 that prevents the robot 10a from overturning and rotates by friction with a ground when the robot 10a moves.

The robot 10b in FIG. 2 may have a structure in which an internal configuration of the robot is firmly sealed by the housing 12, and unlike the robot 10a in FIG. 1, structures such as the display units 111 and 113 that are relatively weak in durability are omitted.

More specifically, the housing 12 may have a combined structure of an upper housing 12u and a lower housing 12d. A sensor 121 may be provided on an upper surface of the upper housing 12u, and a sensor 123 may also be provided on a front surface of the lower housing 12d. It is a matter of course that various types of sensors may be adopted for the sensors 121 and 123 depending on the purpose.

In addition, as described above, a wheel 141 as a traveling portion of the robot 10b according to the present exemplary embodiment for traveling in the outdoor environment may directly rotate by power transmission from the motor.

The robots 10a and 10b described above are illustrated for expressing the robot described below in the present exemplary embodiment, and are a type of robot included in a logic and system described below. Therefore, the present invention is not necessarily limited thereto.

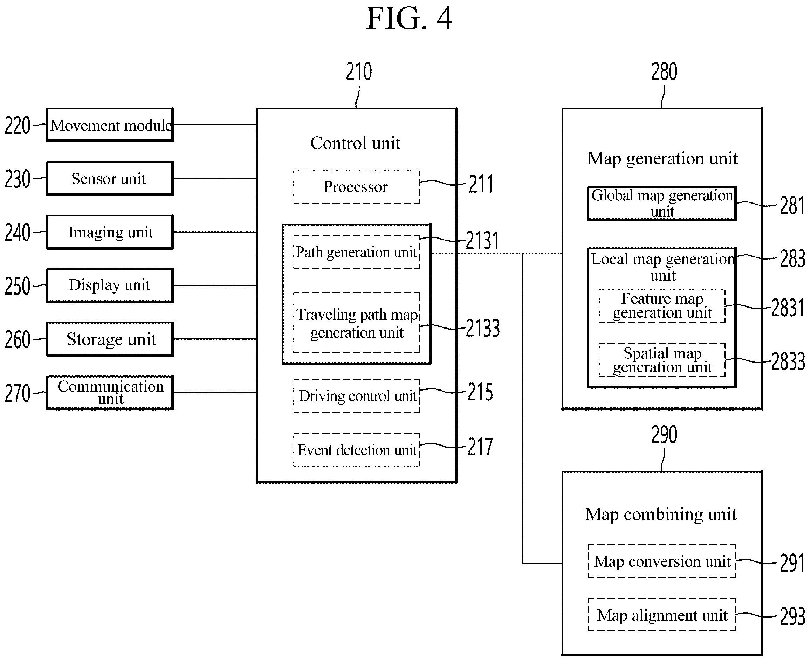

FIG. 3 is a diagram illustrating a configuration of a robot control system according to an exemplary embodiment of the present invention, and FIG. 4 is a diagram illustrating a configuration of the robot according to an exemplary embodiment of the present invention.

The following description will be made with reference to FIGS. 3 and 4.

The robot control system according to the present exemplary embodiment may include the robot 10, a database 30, and a server 50.

As described above, the robot 10 may include robots of various shapes and configurations that may travel indoors and outdoors, and may perform a task by transmitting and receiving information such as map information, traveling information, and traveling path information with the database 30 and the server 50.

Referring to FIG. 4, the robot 10 according to the present exemplary embodiment may include a control unit 210, a movement module 220, a sensor unit 230, an imaging unit 240, a display unit 250, a storage unit 260, a communication unit 270, a map generation unit 280, and a map combining unit 290.

First, the movement module 220 may include the motor, a gear assembly, and the wheels, and may provide a driving force for movement (traveling) of the robot 10.

Specifically, the motor may be a core component of the movement module and may transmit a direct driving force to the wheels of the robot, the gear assembly may appropriately convert a rotational force generated by the motor and transmit the converted force to the wheels, and the wheels may transmit such a driving force to the ground to move the robot in a desired direction.

The movement module 220 may be controlled based on a current flowing through the motor during traveling of the robot.

The sensor unit 230 may include various sensors that may acquire information regarding the target space during traveling of the robot in the target space. For example, the sensor unit 230 may include at least two or more of an image sensor, a light detection and ranging (LiDAR) sensor, and a radar sensor. Here, the target space may refer to a specific area or region where the robot 10 travels or performs a task. The target space may mainly refer to an indoor or outdoor space which is a physical place where the robot 10 needs to move, and may include a destination or a work environment where setting of a path of the robot, traveling of the robot, a task, and the like are performed.

Specifically, the sensor unit 230 may include various sensors for measuring the state of the robot 10, and may generate state data regarding the state of the robot 10 by using the sensors. For example, the state data may include a battery state (for example, a temperature or a remaining battery level), a motor state, position information (for example, a current position, an inclination, or an acceleration), temperature information, a wind direction, vibration information, a strength of communication with another robot, and a network delay time.

The imaging unit 240 may include a visible image sensor unit (not illustrated) for capturing a visible image, a thermal image sensor unit (not illustrated) for acquiring a thermal image, or the like. For example, the visible image sensor unit (not illustrated) may be implemented by an RGB camera, and the thermal image sensor unit (not illustrated) may be implemented by an infra-red camera. With such a configuration of the imaging unit 240, the robot 10 may accurately identify objects not only in a high-luminance environment such as during the day, but also in a low-luminance environment such as at night.

The display unit 250 may display the state of the robot 10, a time, weather, the information regarding the target space, or the like. In the robot control system according to the present exemplary embodiment, for example, in a case where the robot 10 is not able to travel or perform a task (or work) due to an event, the robot 10 may transmit state information of the robot 10 to the server 50 and then display at least a part of the state information of the robot 10 on the display unit 250 and wait until a worker arrives at a location where the state information is transmitted to the server 50 and inputs a separate command.

That is, the display unit 250 may display a general state of the robot, information required for the task, and information to be provided to the user or worker, and it is a matter of course that the display unit 250 may also display information required for the robot control system.

The storage unit 260 may store various data required for an operation of the robot 100 or various data generated during an operation, and may store various data received from the outside. For example, the storage unit 260 may store a program for the operation of the robot 100, the map information, a captured image, a scenario for performing a task, and the like.

In addition, the storage unit 260 may store the state data of the robot 10 acquired in real time or state data or monitoring path of another robot.

The communication unit 270 may include one or more modules that enable the robot 10 to communicate with other devices (for example, a remote control system, the server 50, another robot, and the database 30). For example, the communication unit 270 may receive real-time weather information of the current position or destination of the robot 10 from an external server.

For example, the communication unit 270 may transmit the state data to another robot or receive the state data or monitoring path of another robot from the another robot.

In addition, the communication unit 270 may include a GPS module, and the communication unit 270 may receive a signal from a satellite to determine the current position of the robot 10.

Meanwhile, the control unit 210 may include a processor 211, a path generation unit 2131, a traveling path map generation unit 2133, a driving control unit 215, and an event detection unit 217.

The processor 211 may process information acquired from various components included in the robot described above.

The path generation unit 2131 and the traveling path map generation unit 2133 may select one of maps formed by aligning (combining) at least two different formats of maps generated by the map generation unit 280, and the path generation unit 2131 may generate a traveling path of the robot within the selected map, or the traveling path map generation unit 2133 may generate a traveling path map to be used by the robot based on the generated traveling path.

The above-described traveling path map means a simplified map including nodes, edges, and context information included in each node or edge generated according to an example described below, the node may represent an object that is a task execution target of the robot or a point where a change in state of the robot (for example, a change in traveling direction) occurs on the traveling path, the edge may connect the nodes and represent the traveling path of the robot between the nodes, and the context information may represent a control command value of the robot at the node or edge, information regarding the node, or the like.

Meanwhile, the path generation unit 2131 may generate a traveling path between objects based on a map generated by a global map generation unit 281, and may generate a path based on a map generated by a local map generation unit 283 in the vicinity of an object (a predetermined region around the object), thereby more effectively generating the traveling path, and likewise, when modifying the generated traveling path for other reasons, it may be possible to quickly respond to the other reasons by modifying the traveling path according to the exemplary criteria described above. Here, the object may mean an object that affects the traveling of the robot 10, and may include an obstacle or a monitoring target.

In addition, for example, the path generation unit 2131 may generate a plurality of traveling path candidates for the robot 10 to perform a task in the target space (map information), and select an optimal monitoring path from among the generated monitoring path candidates according to a preset criterion, thereby generating an optimal traveling path for the robot 10.

Further, the path generation unit 2131 may generate an optimal traveling path based on the state data of another robot.

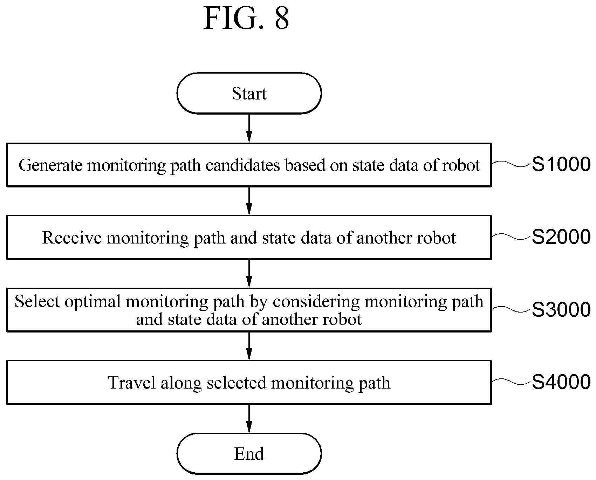

Specifically, the path generation unit 2131 may generate a plurality of monitoring path candidates for monitoring the monitoring target within the target space from the position of the robot, and select at least one monitoring path candidate from among the monitoring path candidates as an optimal monitoring path according to a preset selection criterion. This will be described below with reference to FIGS. 8 to 10.

Meanwhile, the driving control unit 215 may generate or transmit a signal for controlling the movement module 220. More specifically, the signal for controlling the movement module 220 may be generated according to a control signal input from the server 50 through the communication unit 270, or the signal for controlling the movement module 220 may be generated based on a processing result of the processor 211 based on the information regarding the target space acquired from the sensor unit 230 or the imaging unit 240.

In addition, the driving control unit 215 may generate a control signal to provide an optimal driving force for the moving module 220 according to a real-time current change analyzed by the processor 211.

For example, when a current increases above a certain level, the robot may be in a situation where the robot receives a high resistance (for example, a slope or uneven ground), and thus, a gear ratio may be adjusted accordingly or a rotation speed of the motor may be adjusted to enable stable traveling.

The event detection unit 217 may detect an abnormal situation occurring in one of objects existing in the target space, an abnormal situation occurring on the traveling path of the robot, or an abnormal situation occurring in the robot, through the sensor unit 230, the imaging unit 240, the communication unit 270, and the process 211.

The map generation unit 280 may digitize the target space where the robot 10 travels into various formats and then generate a map for each format, and the map combining unit 290 may perform conversion and alignment of the maps generated in each format.

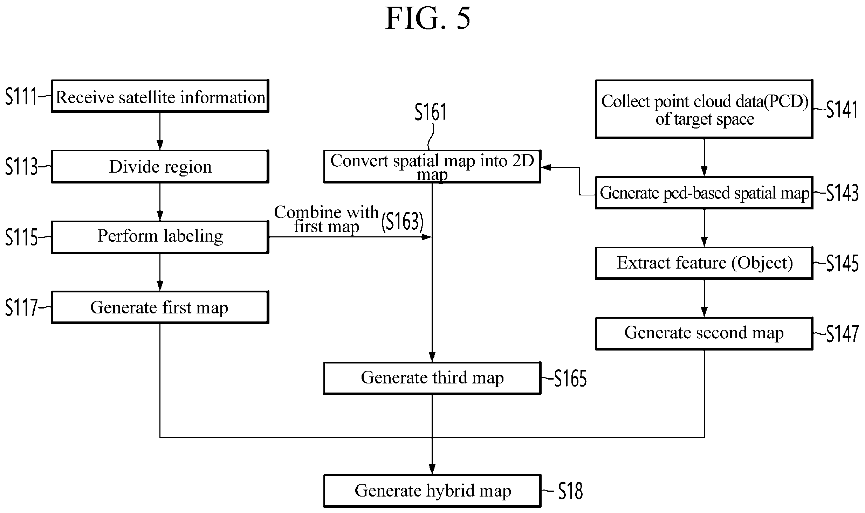

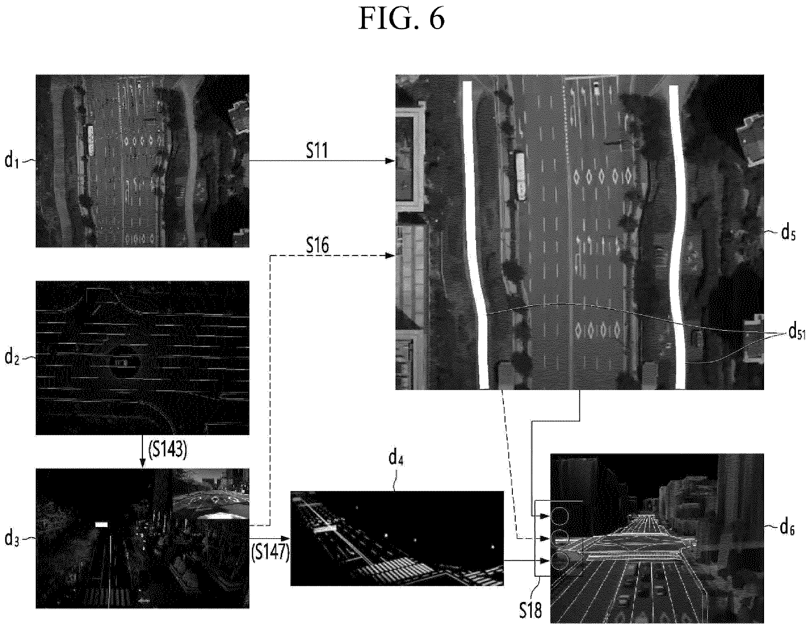

This will be described in more detail with reference to examples of FIGS. 5 and 6 below.

Meanwhile, the database 30 may store in advance the map information of the target space, a plurality of scenarios, traveling paths, and information regarding a type of an event, or the like. For example, the map information may include various map information for expressing the target space, and may include, for example, a satellite map (two-dimensional (2D) map), simultaneous localization and mapping (SLAM) information, point cloud data (PCD), a topological map, a semantic map, a high-definition (HD) map, or the like for the target space.

The server 50 may transmit the map information to the robot 10 or may assign a task to the robot 10 or control the robot 10 according to an assigned task.

It is a matter of course that the server 50 may also serve as an information relay point between the robot 10 and the database 30 in the robot control system, and some of the vehicle event type confirmation, map information transmission, robot control command transmission, and the like described above may be performed in the database 30 or through a component mounted on the robot 10.

FIG. 5 is a diagram illustrating a map generation method according to an exemplary embodiment of the present invention, and FIG. 6 is a diagram illustrating some of maps described in FIG. 5.

The following description will be made with reference to FIGS. 4 to 6.

In the present exemplary embodiment, a map used by the robot 10 to perform a task may be a map (hereinafter, referred to as a hybrid map) in which maps of different formats are combined (overlapping and stacked), and may be divided into a global map and a local map depending on the form of the map.

The global map may mean a 2D map generated by the global map generation unit 281 based on a satellite map received from the communication unit 270 or the database 30, and the local map may mean a three-dimensional (3D) map (spatial map or feature map) generated by the local map generation unit 283 based on point cloud information (point cloud data (PCD)) received from the communication unit 270 or the database 30.

It is a matter of course that the point cloud information required for the generation of the local map may be collected through the sensor unit 230 during the traveling of the robot 10 for mapping the target space and may be stored in advance in the storage unit 260.

The map combining unit 290 may generate the hybrid map by using maps of different formats. More specifically, the map combining unit 290 may include a map conversion unit 291 and a map alignment unit 293. The map conversion unit 291 may convert one of the different formats of the maps into a reference format based on the other format to generate a specific map, and the map alignment unit 293 may generate the specific map by overlapping the maps converted into the same format.

It is a matter of course that the map alignment unit 293 may also generate a single map by overlapping map information of different formats as described above. For example, objects that are task targets may be expressed as the nodes based on the global map, and detailed information of the objects expressed as the respective nodes may overlap with information of the local map to generate the hybrid map.

Referring to FIG. 5, a series of processes classified as step S11 (S111 to S117) for generating a first map represents a process for generating the global map described above, a series of processes classified as step S14 (S141 to S147) represents a process for generating the local map, and a series of processes classified as step S16 (S161 to S165) represents a process for converting some information into a 2D map during the local map generation process and generating an intermediate map by combining necessary information with the first map.

More specifically, in the process for generating the global map, the robot 10 may perform reception (S111) of the satellite information from the database 30 or the server 50 through the communication unit 270.

The satellite information may include aerial photographs, orthophotos, and true orthophotos of the target space, and may be expressed as photographs or images, such as d₁ in FIG. 6, for example.

After receiving the satellite information, the global map generation unit 281 may perform division (S113) of a region based on the received satellite information and perform labeling (S115) to generate the first map (S117).

More specifically, information included in 2D layout data, such as a boundary of a road, a boundary of a building, or a road (d₅₁) usable by the robot, may be expressed as in d₅, for example, by dividing the region (S113), and the labeling (S115) may be performed by inputting the context information for each divided region, necessary region, or the expressed information, for example.

The 2D map generated through the above-described process may be referred to as the first map (d₅) in the present exemplary embodiment.

Next, in the process for generating the local map, the robot 10 may perform collection (S141) of the point cloud information of the target space, which may be expressed as d₂ in FIG. 6, for example. The collection may mean various methods of acquiring the point cloud information (3D data), as described above.

Meanwhile, a spatial map generation unit 2833 may generate a spatial map (d₃) based on the point cloud information. Briefly explaining the generation of the spatial map, the spatial map (d₃) may be generated through post-processing of acquired raw data (the PCD or 3D data). For example, after performing outlier removal (noise removal) on acquired raw information, data sets may be aligned and combined and then subjected to rendering.

After a series of processes for generating the spatial map is performed, or during the series of processes, a feature map generation unit 2831 may perform generation (S147) of a feature map (d₄) through a step (S145) of extracting features of objects.

That is, the 3D map generated through the above-described process may be referred to as a second map (d₄) in the present exemplary embodiment.

Meanwhile, the map combining unit 290 may perform conversion (S161) of the spatial map generated based on the PCD into the 2D map through the map conversion unit 291, and then perform combination (S163) of the converted map with the first map through the map alignment unit 293 to generate a third map (d₅) (S165).

The third map may express some of information not expressed in the satellite information by overlapping the 2D map converted from the spatial map (3D data) on the first map generated based on the satellite information (2D layout data). Therefore, in FIG. 6, the first map and the third map are expressed as d₅ for convenience.

Meanwhile, the control unit 210 may generate the hybrid map (d₆) (S18) by combining the first map, the second map, and the third map through the map generation unit 280 and the map combining unit 290.

According to various exemplary embodiments of the present invention, the hybrid map may also be formed by combining the second map and the third map.

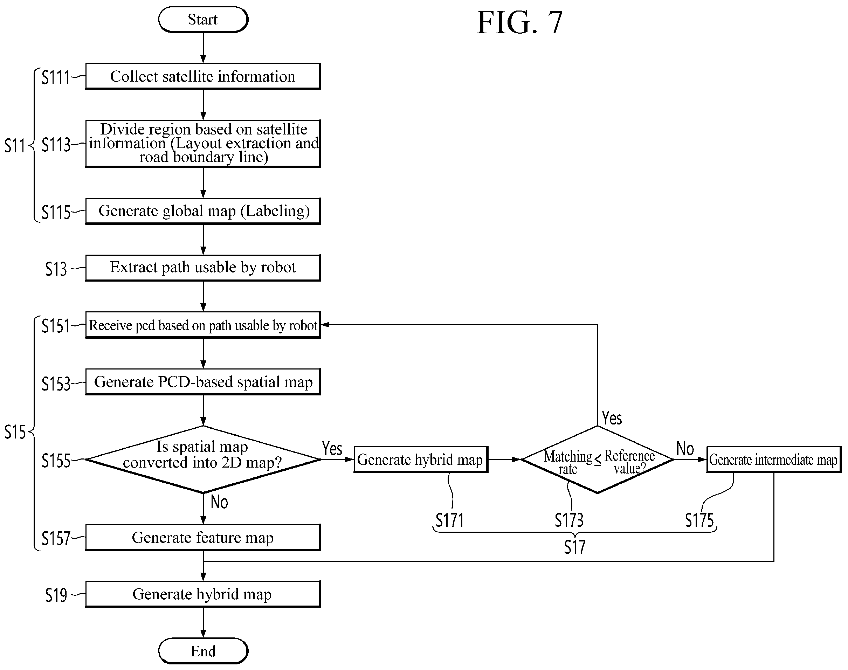

FIG. 7 is a diagram illustrating a map generation method according to an exemplary embodiment of the present invention.

Hereinafter, a description will be made with reference to FIG. 7, but the above-described contents will be omitted.

The robot 10 according to the present exemplary embodiment may perform generation (S11) of the global map by using the above-described configuration and method, and the path generation unit 2131 may perform extraction (S13) of a path (d₅₁ of FIG. 5) usable by the robot 10 based on the generated global map.

For example, the path usable by the robot 10 may be set to a region that includes a part of a boundary between a region where a vehicle travels and a region where a person may pass.

Further, the robot 10 may perform reception (S151) of the PCD stored in the database 30 through the communication unit 270. More specifically, the reception of the PCD may be based on the path usable by the robot 10, the path being extracted in the step (S13).

That is, the traveling path of the robot or the map may be more effectively generated by receiving the PCD on the path usable by the robot, rather than receiving a large amount of PCD for the target space.

Meanwhile, the spatial map generation unit 2833 may perform generation (S153) of a PCD-based spatial map, and in a case where the generated spatial map is converted into the 2D map by the map conversion unit 291 (S155: Yes), the map alignment unit 293 may combine the converted 2D map and the map (first map or global map) generated in the step (S11) to generate the hybrid map (S171).

The hybrid map generated in the step (S171) is referred to as a hybrid map in the sense that two maps containing different information overlap each other, and it is obvious that information included is different from that of the hybrid map generated in step S19.

After the step (S171), the map alignment unit 293 may compare a matching rate (the degree of overlap) of the two maps with a reference value, and in a case where the matching rate exceeds the reference value (S173: No), the two overlapping maps may be aligned to generate the intermediate map (S175).

Alternatively, for example, the hybrid map generated in the step (S171) may mean a map in which two maps (the first map and the converted 2D map) containing different information overlap each other, and in this case, when the matching rate (the degree of overlap) is compared with the reference value in the step (S173), and the matching rate exceeds the reference value (S173: No), the intermediate map in step S175 may mean the map already generated in the step (S171).

The degree of overlap may be determined based on elements (for example, a boundary of the path used by the robot) commonly included in the first map (a 2D layout data map based on the satellite information) and the 2D map converted from the spatial map (3D Data).

Meanwhile, in a case where the spatial map generated in the step (S155) is not converted into the 2D map (S155: No), the feature map generation unit 2831 may extract the features of the objects in the spatial map to generate the feature map (S157), which is as described above.

Further, the control unit 210 may generate the hybrid map (S19) by combining two or more maps generated by the map generation unit 280 and the map combining unit 290 through the above-described process.

Next, a method for generating a monitoring path of a facility monitoring robot will be described with reference to FIG. 8.

FIG. 8 is a flowchart illustrating the method for generating a monitoring path according to an exemplary embodiment of the present invention.

Referring to FIG. 8, the robot 10 that monitors the target space may generate a plurality of monitoring path candidates based on the state data of the robot 10 through the path generation unit 2131 (S1000). At this time, the robot 10 may generate a monitoring path candidate on which the robot 10 may perform a task (or work) based on the hybrid map. Here, the monitoring path candidate may mean a path along which the robot 10 repeatedly moves to monitor the monitoring target within the target space.

Specifically, the robot 10 may determine a position of an obstacle in the target space through the hybrid map, and generate a monitoring path candidate on which the robot 10 may monitor the monitoring target while avoiding the obstacle.

In addition, the robot 10 may generate the monitoring path candidates by considering a high-priority monitoring region in the target space. At this time, the robot 10 may automatically reset the high-priority monitoring region by dynamically evaluating a risk level based on real-time data rather than simply setting a fixed high-priority monitoring region. For example, the robot 10 may determine a need for a specific region to be monitored more preferentially based on a temperature change in the region or a warning from a motion detection sensor, and generate the monitoring path candidates accordingly.

In addition, the robot 10 may generate a monitoring path candidate in which a blind spot does not occur for the monitoring target in the target space by considering a field of view of the camera.

Further, the robot 10 may receive a monitoring path and state data of another robot from the another robot in the target space through the communication unit 270 (S2000).

Next, the robot 10 may select an optimal monitoring path from among the monitoring path candidates generated based on the state data and monitoring path of the another robot monitoring the target space (S3000).

Specifically, the robot 10 may select a path that does not conflict with the monitoring path of the another robot and avoid redundant monitoring of a region that is already monitored by the another robot from among the generated monitoring path candidates. At this time, the monitoring path may be selected by comprehensively considering the fields of view (FOV) of the cameras, monitoring angles, and sensor ranges of the robots, rather than simply considering movement paths.

That is, the robot 10 may select the monitoring path such that monitoring ranges of the robots monitoring the target space do not overlap each other.

In addition, the robot 10 may select an optimal monitoring path from among the generated monitoring path candidates by considering a strength of communication with another robot and a network delay time. As a result, the robot may prevent work disruption due to a communication failure or data transmission delay and perform stable monitoring work.

In addition, the robot 10 may travel in the target space according to the selected monitoring path and monitor the monitoring target (S4000).

Meanwhile, the robot 10 may travel along the monitoring path and repeat the above-described path generation and selection process (steps S1000 to S3000) according to a preset cycle. Here, the preset cycle may be variably determined according to the number of monitoring targets of the robot 10, a movement distance, a width of a target region, a battery consumption state of the robot, stability of the monitoring work, or the like.

For example, the larger the number of monitoring targets or the wider the monitoring region, the shorter the cycle the robot 10 may perform the path generation and selection process again.

As another example, the cycle for performing the path generation and selection process again may be shorter for a robot with a larger battery consumption.

Therefore, the robot 10 does not simply select the monitoring path once and then perform traveling, but may actively cope with a change in situation through a process of optimizing the monitoring path in real time.

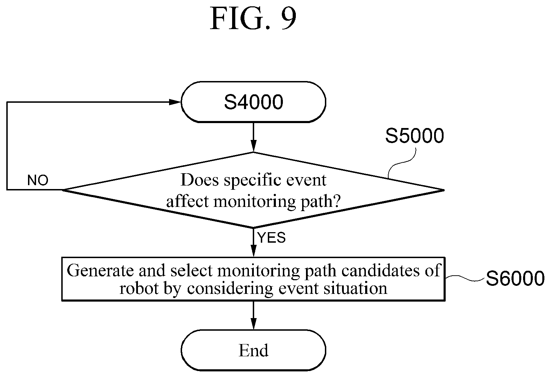

In addition, the robot 10 may repeatedly perform the above-described path generation and selection process (steps S1000 to S3000) in a case where a specific event occurs. Here, the specific event may include a decrease in remaining battery level, detection of an additional obstacle, weakening of the communication strength, a fire, gas generation, and the like. This will be additionally described with reference to FIG. 9.

FIG. 9 is a flowchart illustrating another method for generating a monitoring path according to an exemplary embodiment of the present invention.

Referring to FIG. 9, the robot 10 may detect occurrence of a specific event and determine whether or not the specific event that has occurred affects the monitoring path of the robot 10 (S5000).

Specifically, the robot 10 may determine that the detected specific event does not affect the monitoring path in a case where the specific event is a minor problem such as a simple sensor malfunction or movement of a small object, and may determine that the detected specific event affects the path in a case where the specific event is an event that entails a great risk (for example, a fire or intruder detection).

The robot 10 may determine that the detected specific event affects the path in a case where the event occurs within the monitoring path of the robot 10 or in a region close to the monitoring path of the robot 10. The robot 10 may determine that the specific event does not affect the monitoring path in a case where the event occurs in a region physically distant from the monitoring path.

In addition, the robot 10 may evaluate an importance of the specific event that has occurred and determine whether or not the specific event affects the monitoring path based on the evaluated importance. At this time, the robot 10 may determine the importance to be different depending on whether the specific event that has occurred is temporary or continuous.

For example, the robot 10 may evaluate a specific event that is temporary or is not repeated as having a low importance and evaluate a specific event that is continuous as having a higher importance.

In other words, the robot 10 may analyze a characteristic, location, and importance of the specific event that has occurred, and a relationship between the specific event that has occurred and the current monitoring path to determine whether or not it is necessary to change the current monitoring path.

Next, in a case where it is determined that the monitoring path is affected (S5000: YES), the robot 10 may generate and select the monitoring path candidates by considering the specific event (S6000).

Specifically, the robot 10 may determine a region where a specific event has occurred as a new monitoring region or an avoidance region according to the specific event, generate monitoring path candidates that may monitor the new monitoring region, and select an optimal monitoring path by considering the monitoring path and state data of another robot.

For example, in a case where a fire warning occurs in a factory, the robot 10 may set the corresponding region as a new monitoring region and generate a path that may intensively monitor the region where the fire has occurred. At this time, the robot may change the path to preferentially monitor a region close to the region where the fire has occurred, and select a path that may monitor in real time whether or not the fire has spread within the corresponding region and a change in surrounding environment.

As another example, in a case where an intruder is found in a specific region, the robot 10 may set the corresponding region as a new monitoring region and generate a path that includes an entrance and exit passage to prevent the intruder from leaving the region any longer. In this case, the robot 10 may track movement paths of another robot and the intruder and select a monitoring path so as to expand the monitoring range.

The robot 10 may determine a region where a specific event has occurred as an avoidance region according to the specific event and generate monitoring path candidates that avoid the avoidance region.

For example, in a case where a chemical spill has occurred, the robot may set the corresponding region as the avoidance region because there is a risk factor, generate a path that bypasses the region where the chemical spill has occurred, and preferentially select the safest monitoring path.

As another example, since communication becomes unstable in a region where high electromagnetic interference occurs, the robot may set the corresponding region as the avoidance region, generate monitoring path candidates that bypass the avoidance region, and select a monitoring path with the strongest communication signal from among the monitoring path candidates.

Further, the robot 10 may generate monitoring path candidates that may monitor a new monitoring region while maintaining a part of the existing monitoring path or bypass the avoidance region.

The robot 10 may additionally predict a dynamic change region that is likely to be additionally affected by a specific event, and generate monitoring path candidates by considering the predicted dynamic change region. At this time, the dynamic change region may mean a region where a specific event is likely to spread (a surrounding region adjacent to a region where the specific event has occurred), and the dynamic change region may be a region that needs to be safely bypassed or, conversely, a region that requires intensive monitoring. At this time, the robot may predict the dynamic change region that is potentially affected by utilizing an event spread pattern and surrounding environment data (for example, a wind direction, a terrain gradient, humidity, or temperature). For example, in a case where a fire has occurred, the robot may predict a region where smoke may spread by considering a wind direction and a wind speed, and in a case where a hazardous substance has leaked in a liquid form, the robot may predict a region where the substance is likely to flow by considering a terrain gradient.

Then, after predicting the dynamic change region, the robot 10 may generate monitoring path candidates by considering the dynamic change region. For example, in a case where a fire has occurred in region A of a factory and smoke is predicted to spread to region B adjacent to region A, the robot 10 may generate monitoring path candidates that bypass region A (event occurrence region) and region B (dynamic change region).

On the other hand, in a case where it is determined that the monitoring path is not affected (S5000: NO), the robot 10 may continue to travel along the previously selected monitoring path and perform a task to monitor the monitoring target.

According to the present invention described above, the monitoring path and state data of another robot are received in real time, and the monitoring path is selected based on the received monitoring path and state data of another robot, so that it is possible to prevent overlap in monitoring range between the robots and maximize monitoring efficiency.

In addition, the present invention enables the robot to continuously optimize the path based on real-time state data of the target space, so that it is possible to immediately cope with a dynamic environmental change, unlike the existing fixed path monitoring method.

Further, the present invention may generate the path by predicting the dynamic change region where a specific event is likely to spread when the specific event occurs. Therefore, it is possible to take a preemptive measure before a risk such as a fire or a hazardous substance leakage spreads to a surrounding region, and safe monitoring based on prediction may be possible.

In addition, the present invention may reflect environmental changes in real time by reevaluation of the path by the robot at a set cycle. Therefore, it is possible to provide a function to actively cope with a change in situation by quickly changing the path when a risk level of a specific region increases or a new obstacle is detected.

Various exemplary embodiments described herein may be implemented in computer-readable recording medium using, for example, software, hardware, or a combination thereof.

According to a hardware implementation, the exemplary embodiments described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electric units for performing other functions. In some cases, the exemplary embodiments described in the present specification may be implemented as a control module itself.

According to a software implementation, exemplary embodiments such as procedures and functions described in the present specification may be implemented as separate software modules. Each of the software modules may perform one or more functions and operations described in the specification. A software code may be implemented as a software application written in a suitable programming language. The software code may be stored in a memory module and executed by a control module.

The technical spirit of the present invention has been described only by way of example hereinabove, and the present invention may be variously modified, altered, and substituted by those skilled in the art to which the present invention pertains without departing from essential features of the present invention.

Accordingly, the exemplary embodiments disclosed in the present invention and the accompanying drawings are provided in order to describe the technical spirit of the present invention rather than limiting the technical spirit of the present invention, and the scope of the present invention is not limited by these exemplary embodiments and the accompanying drawings. The scope of the present invention should be interpreted by the following claims and it should be interpreted that all spirits equivalent to the following claims fall within the scope of the present invention.

## Claims

1. A method for generating a facility monitoring path of a robot, the method comprising:
generating one or more monitoring path candidates based on state data of the robot that monitors a target space;
selecting an optimal monitoring path from among the monitoring path candidates based on state data and a monitoring path of another robot that monitors the target space; and
performing monitoring work for the target space based on the optimal monitoring path.

2. The method of claim 1, wherein in the selecting of the optimal monitoring path, the optimal monitoring path is selected such that monitoring ranges of the robots that monitor the target space do not overlap each other.

3. The method of claim 1, wherein the state data includes at least one of a remaining battery level, a sensor state, a movement speed, or a current position.

4. The method of claim 1, wherein in the generating of one or more monitoring path candidates, the monitoring path candidates are generated by considering a high-priority monitoring region in the target space.

5. The method of claim 1, wherein in the generating of one or more monitoring path candidates, the monitoring path candidates are generated by considering a specific event in a case where the specific event occurs in the target space.

6. The method of claim 5, wherein in the generating of one or more monitoring path candidates, a dynamic change region that is likely to be affected by the specific event is predicted, and the monitoring path candidates are generated by considering the predicted dynamic change region.

7. A robot that executes a method for generating a facility monitoring path, the robot comprising:
a control unit generating one or more monitoring path candidates based on state data of the robot that monitors a target space, selecting an optimal monitoring path from among the monitoring path candidates based on state data and a monitoring path of another robot that monitors the target space, and performing monitoring work for the target space based on the optimal monitoring path.

8. The robot of claim 7, wherein the control unit selects the optimal monitoring path such that monitoring ranges of the robots that monitor the target space do not overlap each other.

9. The robot of claim 7, wherein the state data includes at least one of a remaining battery level, a sensor state, a movement speed, or a current position.

10. The robot of claim 7, wherein the control unit generates the monitoring path candidates by considering a high-priority monitoring region in the target space.

11. The robot of claim 7, wherein the control unit generates the monitoring path candidates by considering a specific event in a case where the specific event occurs in the target space.

12. The robot of claim 11, wherein the control unit predicts a dynamic change region that is likely to be affected by the specific event and generates the monitoring path candidates by considering the predicted dynamic change region.

13. A computer-readable recording medium storing a program for executing the method according to any one of claims 1 to 6.

14. A program stored in a computer-readable recording medium and including a program code for executing the method according to any one of claims 1 to 6.
